# EUROPÄISCHE PATENTANMELDUNG

(11) **EP 3 521 643 A1**
(43) Veröffentlichungstag der Anmeldung: **07.08.2019**
(21) Anmeldenummer: 19154223.2
(22) Anmeldetag: 29.01.2019
(51) Int. Cl.: F16B 35/04, F16B 41/00, F16B 2/22

(54) **BEFESTIGUNGSSYSTEM**

(30) Priorität: 02.02.2018 DE 102018102349
(71) Anmelder: Illinois Tool Works, Inc., Glenview, Illinois 60025 (US)
(72) Erfinder: JAKOB, Andreas, Glenview, Illinois, 60025 (US); SANTOS, Nelson, Glenview, Illinois, 60025 (US); DA ROCHA, Bruno, Glenview, Illinois, 60025 (US); BECKER, Sven, Glenview, Illinois, 60025 (US); BÖHNKE, Stephan, Glenview, Illinois, 60025 (US)
(74) Vertreter: Trinks, Ole

(57) **Zusammenfassung**

Die Erfindung betrifft ein Befestigungssystem zur Befestigung eines Bauteils (34, 134) an einem Trägerbauteil (42), insbesondere einem Trägerbauteil eines Fahrzeugs, umfassend einen Befestigungsbolzen (10,110), der durch eine Durchgangsöffnung (32, 132) des Bauteils hindurch in eine Befestigungsöffnung (44) des Trägerbauteils einsetzbar ist, wobei das Befestigungssystem weiterhin ein auf einem Schaftabschnitt (12,112) des Befestigungsbolzens angeordnetes elastisches Halteelement (22, 122, 222) umfasst, das dazu ausgebildet ist, beim Einführen des Befestigungsbolzens in die Durchgangsöffnung des Bauteils elastisch verformt und in der Durchgangsöffnung gehalten zu werden.

## Beschreibung

Die Erfindung betrifft ein Befestigungssystem zur Befestigung eines Bauteils an einem Trägerbauteil, insbesondere einem Trägerbauteil eines Fahrzeugs, umfassend einen Befestigungsbolzen, der durch eine Durchgangsöffnung des Bauteils hindurch in eine Befestigungsöffnung des Trägerbauteils einsetzbar ist.

Mit derartigen Befestigungssystemen werden Bauteile an Trägerbauteilen von Fahrzeugen, wie PKW oder LKW, befestigt. Bei dem Befestigungsbolzen kann es sich zum Beispiel um eine Befestigungsschraube handeln, die durch die Durchgangsöffnung des Bauteils hindurch gesteckt und in die Befestigungsöffnung des Trägerbauteils eingeschraubt wird. Im eingeschraubten Zustand wird das Bauteil zwischen einem Bolzenkopf der Befestigungsschraube und einer Oberfläche des Trägerbauteils gehalten.

Derartige Bauteile müssen oft in schlecht zugänglichen Bereichen bzw. über Kopf montiert werden. Dazu wäre eine Vormontage des Befestigungsbolzens an dem Bauteil wünschenswert, um eine Prozess- und Kostenoptimierung zu ermöglichen. Hinzu kommt, dass die Durchgangsöffnung und die Befestigungsöffnung aufgrund unvermeidbarer Toleranzen nicht immer optimal koaxial zueinander ausgerichtet sind. Ein entsprechender Toleranzausgleich wäre ebenfalls wünschenswert. Ausgehend von dem erläuterten Stand der Technik liegt der Erfindung die Aufgabe zugrunde, ein Befestigungssystem der eingangs genannten Art bereitzustellen, mit dem eine einfache und zuverlässige Montage auch in schlecht zugänglichen Bereichen und bei Positionstoleranzen möglich ist.

Die Erfindung löst die Aufgabe durch den Gegenstand von Anspruch 1. Vorteilhafte Ausgestaltungen finden sich in den abhängigen Ansprüchen, der Beschreibung und den Figuren.

Für ein Befestigungssystem der eingangs genannten Art löst die Erfindung die Aufgabe dadurch, dass das Befestigungssystem ein auf einem Schaftabschnitt des Befestigungsbolzens angeordnetes elastisches Halteelement umfasst, das dazu ausgebildet ist, beim Einführung des Befestigungsbolzens in die Durchgangsöffnung des Bauteils elastisch verformt und in der Durchgangsöffnung gehalten zu werden.

Das Trägerbauteil kann ein Trägerbauteil eines Fahrzeugs, wie eines PKW oder LKW, sein. Das Bauteil kann entsprechend ebenfalls ein Bauteil eines solchen Fahrzeugs sein. Lediglich beispielhaft sei als ein Anwendungsbeispiel die Befestigung eines Batteriemoduls eines Elektrofahrzeugs als Bauteil an einer Sitzschiene eines Sitzes des Elektrofahrzeugs als Trägerbauteil genannt. Die Erfindung ist aber ebenso für andere Bauteile und Trägerbauteile einsetzbar.

Der Befestigungsbolzen kann eine Befestigungsschraube sein. Der Befestigungsbolzen kann zum Beispiel ein Metallbefestigungsbolzen sein. Der Befestigungsbolzen wird durch eine Durchgangsöffnung des Bauteils hindurch gesteckt und in die Befestigungsöffnung des Trägerbauteils eingesetzt und dort befestigt, beispielsweise verschraubt. Der Befestigungsbolzen kann dabei selbst Befestigungsmittel zum Befestigen in der Befestigungsöffnung besitzen, zum Beispiel ein Außengewinde. Es ist aber auch denkbar, dass der Befestigungsbolzen mittelbar über ein Befestigungselement in der Befestigungsöffnung befestigt wird. Beispielsweise könnte der Befestigungsbolzen in eine Befestigungshülse eingesetzt werden, die dazu ausgebildet ist, in der Befestigungsöffnung befestigt zu werden. Dazu wird der Befestigungsbolzen gemeinsam mit der Befestigungshülse in die Befestigungsöffnung eingesetzt. Beispielsweise kann die Befestigungshülse durch einen Presssitz oder ähnliches in der Befestigungsöffnung befestigt werden. Die Befestigungshülse kann zum Beispiel eine elastische Befestigungshülse sein, zum Beispiel aus einem Kunststoff. Der Befestigungsbolzen besitzt einen zum Beispiel im Wesentlichen zylindrischen Schaftabschnitt, an dessen einem Ende ein im Querschnitt erweiterter Bolzenkopf angeordnet sein kann. Der Bolzenkopf besitzt insbesondere einen größeren Querschnitt als die Durchgangsöffnung des Bauteils. An dem Schaftabschnitt kann ein Außengewinde ausgebildet sein. Der Befestigungsbolzen wird mit dem dem Bolzenkopf abgewandten Ende des Schaftabschnitts durch die Durchgangsöffnung gesteckt und in die Befestigungsöffnung eingesetzt. Im in der Befestigungsöffnung befestigten Zustand wird das Bauteil zwischen dem Bolzenkopf und der dem Bauteil zugewandten Oberfläche des Trägerbauteils gehalten.

Bei dem erfindungsgemäßen Befestigungssystem ist auf dem Schaftabschnitt des Befestigungsbolzens ein elastisches Halteelement angeordnet. Das elastische Halteelement wird beim Einführen des Befestigungsbolzens in die Durchgangsöffnung des Bauteils elastisch verformt und anschließend in der Durchgangsöffnung gehalten. Hierdurch wird der Befestigungsbolzen gegen ein Herausziehen aus der Durchgangsöffnung gehalten. Das elastische Halteelement wird beim Einsetzen in die Durchgangsöffnung insbesondere (radial) komprimiert. Dabei kann das Halteelement im in der Durchgangsöffnung gehaltenen Zustand gegenüber seiner Ruheform (weiterhin) elastisch verformt, insbesondere (radial) komprimiert sein. Es kann sich im in der Durchgangsöffnung gehaltenen Zustand aber auch wieder in seiner unverformten Ruheform befinden. Indem das Halteelement in der Durchgangsöffnung gehalten ist, ist der Befestigungsbolzen gegen ein Herausziehen oder Herausfallen aus der Durchgangsöffnung gesichert, insbesondere in einer Richtung, die der Einführrichtung des Befestigungsbolzens entgegengesetzt ist. Dadurch kann der Befestigungsbolzen in einfacher Weise an dem Bauteil vormontiert werden, wobei das Halteelement sicherstellt, dass der Befestigungsbolzen beispielsweise auch bei einer Überkopfmontage in der vormontierten Stellung gehalten bleibt. In diesem vormontierten Zustand kann das Bauteil beispielsweise gemeinsam mit dem Befestigungsbolzen zu dem Montageort geliefert werden. Durch die elastische Verformung des Halteelements ergibt sich eine besonders einfache (Vor-)Montage. Gleichzeitig kann durch geeignete Ausbildung der Haltemittel zum Halten des Elements in der Durchgangsöffnung auch eine Demontage des Befestigungsbolzens von dem Bauteil ermöglicht werden.

Darüber hinaus erlaubt die elastische Verformung des Halteelements in besonders vorteilhafter Weise einen einfachen, weil selbsttätigen Ausgleich radialer Toleranzen zwischen der Durchgangsöffnung des Bauteils und der Befestigungsöffnung des Trägerbauteils im Zuge des Einsetzens des Befestigungsbolzens in die Befestigungsöffnung. So bildet das elastische Halteelement einen größeren Querschnitt als der größte Querschnitt des in die Durchgangsöffnung eingesetzten Schaftabschnitts des Befestigungsbolzens. Der Durchmesser der Durchgangsöffnung des Bauteils ist insbesondere größer als der Querschnitt bzw. Durchmesser des Schaftabschnitts. Der Schaftabschnitt besitzt also radiales Spiel in der Durchgangsöffnung, wobei das elastische Halteelement verhindert, dass der Schaftabschnitt sich in radialer Richtung frei in der Durchgangsöffnung bewegen kann. Durch elastische Verformung erlaubt das elastische Halteelements jedoch eine radiale Bewegung des Schaftabschnitts und damit einen Toleranzausgleich in radialer Richtung. Sind die Durchgangsöffnung des Bauteils und die Befestigungsöffnung des Trägerbauteils nicht optimal koaxial zueinander ausgerichtet, kann dies auf diese Weise in einfacher Weise und im Zuge des Einsetzens des Befestigungsbolzens in die Befestigungsöffnung automatisch ausgeglichen werden.

Gemäß einer besonders praxisgemäßen Ausgestaltung kann das elastische Halteelement hülsenförmig ausgebildet sein. Es ist dann auf den Schaftabschnitt des Befestigungsbolzens in einfacher Weise aufschiebbar.

Nach einer weiteren Ausgestaltung kann das elastische Halteelement eine zumindest abschnittsweise kegelstumpfförmige Außenfläche besitzen. Die kegelstumpfförmige Außenfläche verjüngt sich in Einführrichtung des Befestigungsbolzens in die Durchgangsöffnung, also insbesondere von dem Bolzenkopf des Befestigungsbolzens weg. Die Außenfläche kann zum Beispiel vollständig kegelstumpfförmig ausgebildet sein. Die kegelstumpfförmige Ausgestaltung der Außenfläche erleichtert das Einsetzen in die Durchgangsöffnung. Gleichzeitig wird ein guter Ausgleich radialer Toleranzen erreicht. Auch die Innenfläche des Halteelements kann zumindest abschnittsweise kegelstumpfförmig sein. Die Außenfläche des Halteelements kann aber auch eine andere Geometrie besitzen.

Gemäß einer weiteren Ausgestaltung kann die Außenfläche des elastischen Halteelements mindestens einen zylindrischen Abschnitt, insbesondere kreiszylindrischen Abschnitt, besitzen. Beispielsweise kann die Außenfläche des Halteelements über einen bestimmten axialen Bereich kegelstumpfförmig sein und an einem Ende oder beiden Enden, beispielsweise dem Ende mit dem größten Querschnitt, einen zylindrischen Abschnitt besitzen. Durch den zylindrischen Abschnitt wird der mit der Innenfläche der Durchgangsöffnung in Reibkontakt stehende Bereich des Halteelements erhöht. Dadurch erfolgen eine bessere Reibwirkung und damit ein sichereres Halten des Halteelements und damit des Befestigungsbolzens in der Durchgangsöffnung, insbesondere in axialer Richtung. Auf diese Weise kann eine definierte Axialposition besonders zuverlässig vorgegeben und gehalten werden.

Das elastische Halteelement kann nach einer weiteren Ausgestaltung dazu ausgebildet sein, beim Einführen des Befestigungsbolzens in die Durchgangsöffnung eine Haltestruktur der Durchgangsöffnung zu hintergreifen. Das Halteelement kann bei dieser Ausgestaltung durch Formschluss in der Durchgangsöffnung gehalten sein. Der Formschluss wirkt insbesondere entgegen der Einführrichtung des Befestigungsbolzens in die Durchgangsöffnung, so dass der Befestigungsbolzen in dieser Richtung nicht aus der Durchgangsöffnung gelöst werden kann. Beispielsweise bei einer Überkopfmontage zieht das Bolzengewicht das Halteelement weiter gegen die Haltestruktur und verbessert somit den Halt weiter. Das Halteelement kann im Zuge des Einsetzens in die Durchgangsöffnung zum Beispiel zunächst beim Vorbeiführen an der Haltestruktur elastisch verformt, insbesondere (radial) komprimiert werden, und sich anschließend wieder teilweise oder vollständig elastisch rückverformen und so die Haltestruktur hintergreifen.

Die Haltestruktur kann eine stufenförmige Querschnittsveränderung der Durchgangsöffnung umfassen. Zum Beispiel kann die Durchgangsöffnung in Einführrichtung des Befestigungsbolzens zunächst einen ersten Abschnitt besitzen, dessen Querschnitt kleiner ist als der (größte) Querschnitt des Halteelements. Dadurch wird dieses beim Einführen zunächst radial nach innen komprimiert. An diesen ersten Abschnitt der Durchgangsöffnung kann sich in Einführrichtung des Befestigungsbolzens ein im Querschnitt stufenartig erweiterter zweiter Abschnitt anschließen, dessen Querschnitt zum Beispiel gleich oder nur geringfügig kleiner als der (größte) Querschnitt des Halteelements sein kann. Das Halteelement verformt sich nach Überschreiten der stufenförmigen Querschnittserweiterung also wieder zurück nach außen in Richtung seiner Ruheform und hintergreift so die stufenartige Querschnittsveränderung.

Alternativ oder zusätzlich zu einem Formschluss kann das elastische Halteelement auch dazu ausgebildet sein, durch Reibkraft bzw. Reibschluss in der Durchgangsöffnung des Bauteils gehalten zu werden. Insbesondere kann das Halteelement allein durch Reibschluss in der Durchgangsöffnung gehalten sein. Die Durchgangsöffnung kann dann eine zylindrische Durchgangsöffnung mit konstantem Querschnitt sein. Sie kann eine glatte Innenwand besitzen.

Das elastische Halteelement kann nach einer weiteren Ausgestaltung eine Mehrzahl von elastischen Haltearmen aufweisen, die beim Einsetzen in die Durchgangsöffnung aus einer Ruhelage nach innen gedrückt werden. Diese Ausgestaltung eignet sich insbesondere, wenn das Halteelement allein durch Reibschluss in der Durchgangsöffnung gehalten ist.

Die elastischen Haltearme können in ihrer Ruhestellung auf einer zumindest abschnittsweise kegelstumpfförmigen Mantelfläche liegen. Die kegelstumpfförmige Mantelfläche verjüngt sich wiederum in Einführrichtungen des Befestigungsbolzens in die Durchgangsöffnung, also insbesondere von dem Bolzenkopf weg. Dies erleichtert wiederum das Einsetzen in die Durchgangsöffnung. Gleichzeitig wird ein besonders guter Ausgleich radialer Toleranzen erreicht. Die Mantelfläche kann wiederum auch einen zylindrischen Abschnitt besitzen, beispielsweise an einem oder beiden Enden der Kegelstumpfform, zum Beispiel an dem Ende mit dem größten Querschnitt. Wiederum kann so eine definierte axiale Position des Halteelements und damit des Befestigungsbolzens besonders zuverlässig festgelegt werden.

Gemäß einer weiteren Ausgestaltung kann das elastische Halteelement formschlüssig und/oder reibschlüssig an dem Schaftabschnitt des Befestigungsbolzens gehalten sein. Für einen Formschluss kann das elastische Halteelement beispielsweise mit einem ringförmigen Halteabschnitt in einer ringförmigen Halteaufnahme des Schaftabschnitts aufgenommen sein. Der Halteabschnitt kann zum Beispiel an dem dem Bolzenkopf abgewandten Ende, also dem in Einrichtungen in die Durchgangsöffnung vorderen Ende des Halteelements ausgebildet sein. Dieses Ende bildet bevorzugt den geringsten Querschnitt des Halteelements. Beim Aufschieben auf den Befestigungsbolzen wird das Halteelement im Bereich des Halteabschnitts also zunächst elastisch nach außen verformt und anschließend unter zumindest teilweiser Rückverformung in der Halteaufnahme des Befestigungsbolzens aufgenommen.

Gemäß einer alternativen Ausgestaltung kann das elastische Halteelement stoffschlüssig an dem Schaftabschnitt des Befestigungsbolzens gehalten sein. Für die stoffschlüssige Verbindung kommt zum Beispiel eine Klebeverbindung oder Vulkanisation in Frage. Auch könnte das elastische Halteelement in einem Kunststoffspritzgussverfahren an den Schaftabschnitt angespritzt sein.

Das elastische Halteelement kann zumindest abschnittsweise aus einem Gummimaterial bestehen. Es kann insbesondere vollständig aus einem Gummimaterial bestehen. Gummi besitzt regelmäßig die in diesem Zusammenhang erforderlichen elastischen Eigenschaften.

Das elastische Halteelement kann nach einer weiteren Ausgestaltung zumindest abschnittsweise aus einem Kunststoffmaterial bestehen. Wiederum kann es vollständig aus einem Kunststoffmaterial bestehen. Ein geeigneter Kunststoff ist zum Beispiel ein Duroplast, der wiederum die erforderlichen elastischen Eigenschaften besitzt. Aber auch andere elastische Kunststoffe kommen selbstverständlich in Frage. Das elastische Halteelement kann alternativ oder zusätzlich auch zumindest abschnittsweise aus einem Metallwerkstoff bestehen. Das Halteelement kann dann elastische bzw. flexible Abschnitt besitzen, zum Beispiel elastische Blech- oder Federabschnitte.

Es sind aber auch andere Materialien für das Halteelement denkbar, zum Beispiel Schaumstoff.

Das Befestigungssystem kann weiterhin das Bauteil mit der Durchgangsöffnung und/oder das Trägerbauteil mit der Befestigungsöffnung umfassen. Das Befestigungssystem kann sich dabei im in die Durchgangsöffnung eingesetzten vormontierten Zustand des Befestigungsbolzens befinden oder im in die Befestigungsöffnung eingesetzten Zustand des Befestigungsbolzens, also im vollständig montierten Zustand des Bauteils an dem Trägerbauteil.

Ausführungsbeispiele der Erfindung werden nachfolgend anhand von Figuren näher erläutert. Es zeigen schematisch:
- Figur 1: einen Befestigungsbolzen eines erfindungsgemäßen Befestigungssystems nach einem ersten Ausführungsbeispiel in einer Seitenansicht,
- Figur 2: einen Befestigungsbolzen eines erfindungsgemäßen Befestigungssystems nach einem zweiten Ausführungsbeispiel in einer Seitenansicht,
- Figur 3a): ein elastisches Halteelement eines erfindungsgemäßen Befestigungssystems nach einem ersten Ausführungsbeispiel in einer ersten perspektivischen Ansicht,
- Figur 3b): das elastische Halteelement aus Figur 3a in einer zweiten perspektivischen Ansicht,
- Figur 3c): das elastische Halteelement aus Figur 3a in einer Schnittansicht,
- Figur 4a): ein elastisches Halteelement eines erfindungsgemäßen Befestigungssystems nach einem zweiten Ausführungsbeispiel in einer ersten perspektivischen Ansicht,
- Figur 4b): das elastische Halteelement aus Figur 4a in einer zweiten perspektivischen Ansicht,
- Figur 4c): das elastische Halteelement aus Figur 4a in einer Schnittansicht,
- Figur 5: den in Figur 1 gezeigten Befestigungsbolzen mit daran angeordnetem elastischem Halteelement aus Figur 3 im an einem Bauteil vormontierten Zustand in einer geschnittenen Ansicht,
- Figur 6: den in Figur 2 gezeigten Befestigungsbolzen mit daran angeordnetem elastischem Halteelement aus Figur 3 im an einem Bauteil vormontierten Zustand in einer geschnittenen Ansicht,
- Figur 7: die Darstellung aus Figur 5 mit einem Trägerbauteil,
- Figur 8: die Darstellung aus Figur 5 im an einem Trägerbauteil befestigten Zustand,
- Figur 9: den Befestigungsbolzen aus Figur 1 mit einem daran angeordneten elastischen Halteelement gemäß einem weiteren Ausführungsbeispiel in einer Seitenansicht,
- Figur 10a): das in Figur 9 gezeigte elastische Halteelement in einer ersten perspektivischen Ansicht,
- Figur 10b): das elastische Halteelement aus Figur 10a in einer zweiten perspektivischen Ansicht,
- Figur 10c): das elastische Halteelement aus Figur 10a in einer Schnittansicht, und
- Figur 11: den Befestigungsbolzen und das elastische Halteelement aus Figur 9 in einem an einem Bauteil vormontierten Zustand in einer geschnittenen Ansicht.

Soweit nichts Anderes angegeben ist, bezeichnen in den Figuren gleiche Bezugszeichen gleiche Gegenstände.

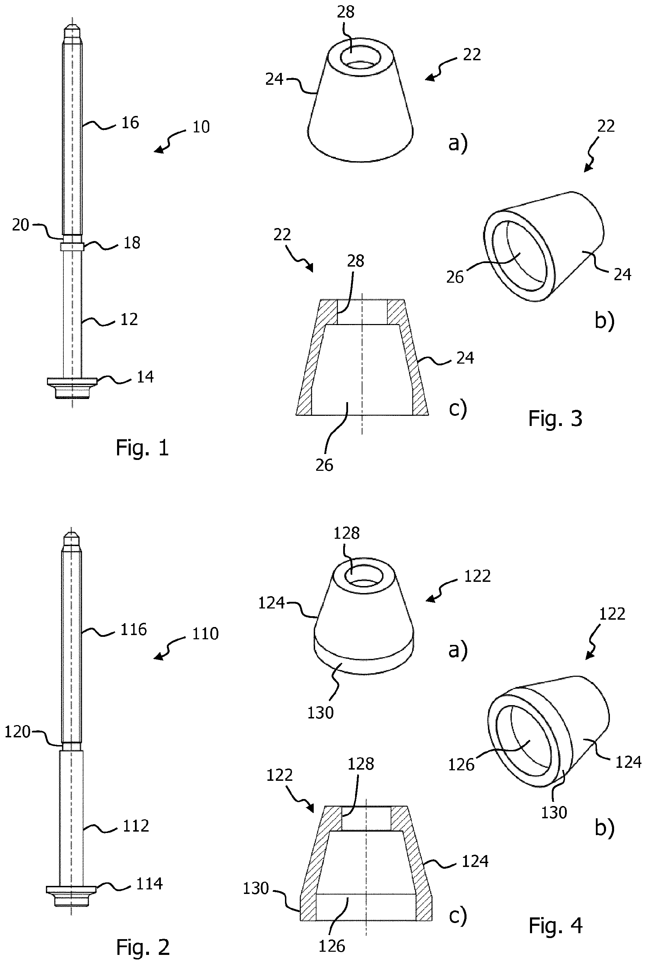

Der in Figur 1 gezeigte Befestigungsbolzen 10 besitzt einen Schaftabschnitt 12 und einen gegenüber dem Schaftabschnitt 12 im Querschnitt erweiterten Bolzenkopf 14. In dem gezeigten Beispiel handelt es sich bei den Befestigungsbolzen 10 um eine Befestigungsschraube aus einem Metallwerkstoff mit einem Außengewinde 16. Außerdem ist an dem Schaftabschnitt 12 eine ringförmige Querschnittserweiterung 18 ausgebildet, die zwischen sich und dem Außengewinde 16 eine ringförmige Halteaufnahme 20 begrenzt.

In Figur 2 ist ein weiteres Ausführungsbeispiel eines Befestigungsbolzens 110 gezeigt. Dieser Befestigungsbolzen 110 besitzt ebenfalls einen Schaftabschnitt 112 und einen gegenüber dem Schaftabschnitt 112 im Querschnitt erweiterten Bolzenkopf 114. Wiederum handelt es sich um eine Befestigungsschraube aus einem Metallwerkstoff mit einem Außengewinde 116. Im Unterschied zu dem Ausführungsbeispiel der Figur 1 ist bei dem Ausführungsbeispiel der Figur 2 der dem Bolzenkopf 114 zugeordnete Teil des Schaftabschnitts 112 insgesamt im Querschnitt gegenüber einer zwischen diesem Teil des Schaftabschnitts 112 und dem Außengewinde 116 gebildeten ringförmigen Halteaufnahme 120 vergrößert. Die Funktion des in Figur 2 gezeigten Befestigungsbolzens 110 entspricht der Funktion des in Figur 1 gezeigten Befestigungsbolzens 10, die nachfolgend näher erläutert wird.

In den Figuren 3a) bis 3c) ist ein elastisches Halteelement 22 nach einem ersten Ausführungsbeispiel gezeigt. Das elastische Halteelement 22 besitzt in dem gezeigten Ausführungsbeispiel eine vollständig kegelstumpfförmige Außenfläche 24. Die die Außenfläche 24 bildende Wand des elastischen Halteelements 22 begrenzt eine Aufnahme 26 für einen Befestigungsbolzen. Das elastische Halteelement 22 ist entsprechend hülsenförmig ausgebildet. An seinem den geringsten Querschnitt aufweisenden Ende, in Figur 3c) dem oberen Ende, besitzt das elastische Halteelement 22 einen radial nach innen ragenden ringförmigen Halteabschnitts 28. Dieser bildet den kleinsten Querschnitt der Aufnahme 26. Das elastische Halteelement 22 kann beispielsweise aus einem elastischen Gummimaterial oder einem elastischen Kunststoffmaterial bestehen.

In den Figuren 4a) bis 4c) ist ein elastisches Halteelement 122 nach einem weiteren Ausführungsbeispiel gezeigt. Dieses entspricht hinsichtlich Ausgestaltung und Funktion weitestgehend dem Ausführungsbeispiel nach Figur 3. Es besitzt wiederum eine in diesem Fall abschnittsweise kegelstumpfförmige Außenfläche 124 und eine Aufnahme 126 für einen Befestigungsbolzen. Wiederum ist am in Figur 4c) oberen Ende ein nach innen ragender ringförmiger Halteabschnitt 128 ausgebildet, der den geringsten Querschnitt der Aufnahme 126 bildet. Im Unterschied zu dem Ausführungsbeispiel nach Figur 3 besitzt die Außenfläche des elastischen Halteelements 122 gemäß Figur 4 an seinem dem Halteabschnitt 128 abgewandten Ende mit dem größten Querschnitt, in Figur 4c) dem unteren Ende, einen zylindrischen Abschnitt 130. Auch das elastische Halteelement 122 nach Figur 4 kann aus einem elastischen Gummimaterial oder einem elastischen Kunststoffmaterial bestehen.

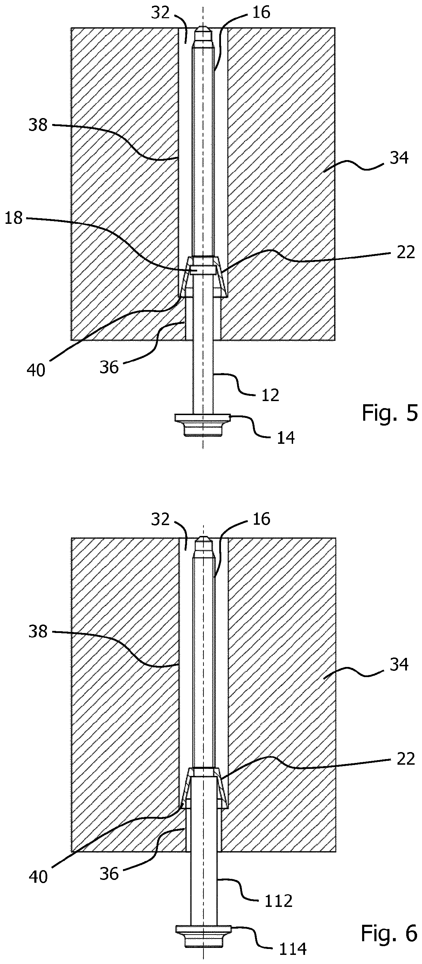

In Figur 5 ist ein in einer Durchgangsöffnung 32 eines Bauteils 34 vormontierter Zustand des Befestigungsbolzens 10 aus Figur 1 und des elastischen Halteelements 22 aus Figur 3 zeigt. Es ist erkennbar, dass der Befestigungsbolzen 10 in die Aufnahme 26 des elastischen Halteelements 22 eingeschoben wurde, wobei der Halteabschnitt 28 unter zunächst elastischer Verformung über das Außengewinde 16 geschoben wurde bis der Halteabschnitt 28 in der ringförmigen Halteaufnahme 20 des Befestigungsbolzens 10 formschlüssig aufgenommen wurde. In diesem Zustand ist das elastische Halteelement 22 an dem Befestigungsbolzen 10 gehalten. In entsprechender Weise könnte das elastische Halteelement 122 aus Figur 4 an dem Befestigungsbolzen 10 gehalten sein.

In dem an dem Befestigungsbolzen 10 gehaltenen Zustand wurde zum Erreichen des in Figur 5 gezeigten Vormontagezustands der Befestigungsbolzen 10 mit dem daran angeordneten elastischen Halteelement 22 in die Durchgangsöffnung 32 des Bauteils 34 eingeschoben, in Figur 5 von unten nach oben. Die Durchgangsöffnung 32 besitzt in Einführrichtung zunächst einen ersten Abschnitt 36, dessen Querschnitt kleiner ist als der größte Querschnitt des elastischen Halteelements 22. An diesen ersten Abschnitt 36 schließt sich ein zweiter Abschnitt 38 mit einem größeren Querschnitt, im gezeigten Beispiel einem den größten Querschnitt des elastischen Halteelements 22 etwa entsprechenden Querschnitt an. Der erste Abschnitt 36 geht stufenartig in den zweiten Abschnitt 38 über, wie bei dem Bezugszeichen 40 gezeigt. Beim Einführen des Befestigungsbolzens in die Durchgangsöffnung 32 wird das elastische Halteelement 22 also zunächst durch den ersten Abschnitt 36 radial nach innen komprimiert. Nach Überschreiten des ersten Abschnitts 36 verformt sich das elastische Halteelement 22 wieder radial nach außen und hintergreift so die stufenartige Querschnittsveränderung 40. In dem in Figur 5 gezeigten vormontierten Zustand ist der Befestigungsbolzen 10 mit dem elastischen Halteelement 22 also formschlüssig in der Durchgangsöffnung 32 gehalten, wobei der Formschluss insbesondere entgegen der Einführrichtung des Befestigungsbolzens 10, in Figur 5 also nach unten wirkt. Da in der entgegengesetzten Richtung der Bolzenkopf 14 mit seinem gegenüber dem ersten Abschnitt 36 vergrößerten Querschnitt ein Lösen des Befestigungsbolzens 10 aus der Durchgangsöffnung 32 verhindert, kann der Befestigungsbolzen 10 zuverlässig vormontiert an dem Bauteil 34 gehalten werden.

Figur 6 entspricht der Darstellung aus Figur 5, wobei anstelle des Befestigungsbolzens 10 der Befestigungsbolzen 110 in die Durchgangsöffnung 32 eingesetzt ist. Hinsichtlich Montage und Funktion entspricht diese Ausgestaltung der Ausgestaltung nach Figur 5. Wiederum könnte anstelle des elastischen Halteelements 22 auch in Figur 6 selbstverständlich das elastische Halteelement 122 aus Figur 4 zum Einsatz kommen.

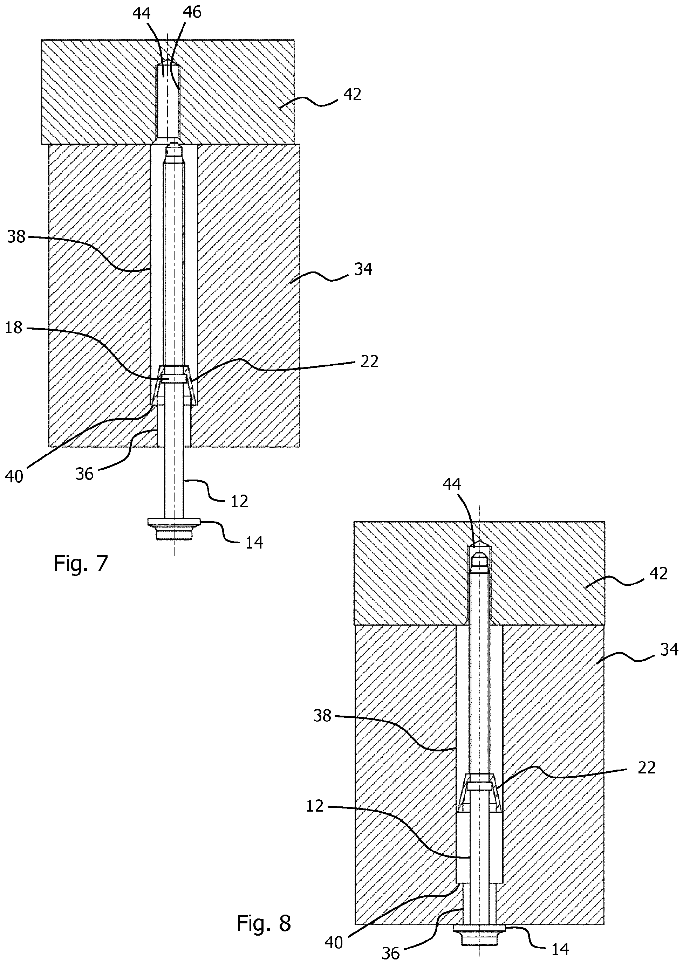

Figur 7 zeigt die Darstellung aus Figur 5, wobei zusätzlich bei dem Bezugszeichen 42 ein Trägerbauteil mit einer Befestigungsöffnung 44 gezeigt ist, an dem das Bauteil 34 befestigt werden soll. Die Befestigungsöffnung 44 besitzt ein zu dem Außengewinde 16 des Befestigungsbolzens 10 korrespondierendes Innengewinde 46. Figur 7 dient zur Veranschaulichung einer aufgrund von Positionstoleranzen nicht optimal koaxialen Ausrichtung von Durchgangsöffnung 32 des Bauteils 34 und Befestigungsöffnung 44 des Trägerbauteils 42. In diesem Fall ist trotzdem in einfacher Weise ein Einschrauben des Befestigungsbolzens 10 in die Befestigungsöffnung 44 möglich, wobei das elastische Halteelement 22 durch elastische Verformung einen radialen Ausgleich des Befestigungsbolzens 10 ermöglicht. Dies gilt in entsprechender Weise für das elastische Halteelement 122 aus Figur 4.

Figur 8 zeigt einen fertig montierten Zustand des Bauteils 32 an dem Trägerbauteil 42, in dem der Befestigungsbolzen 10 in die Befestigungsöffnung 44 eingeschraubt ist. Das Bauteil 32 ist in diesem Zustand sicher zwischen dem Bolzenkopf 14 und der zugewandten Oberfläche des Trägerbauteils 42 gehalten.

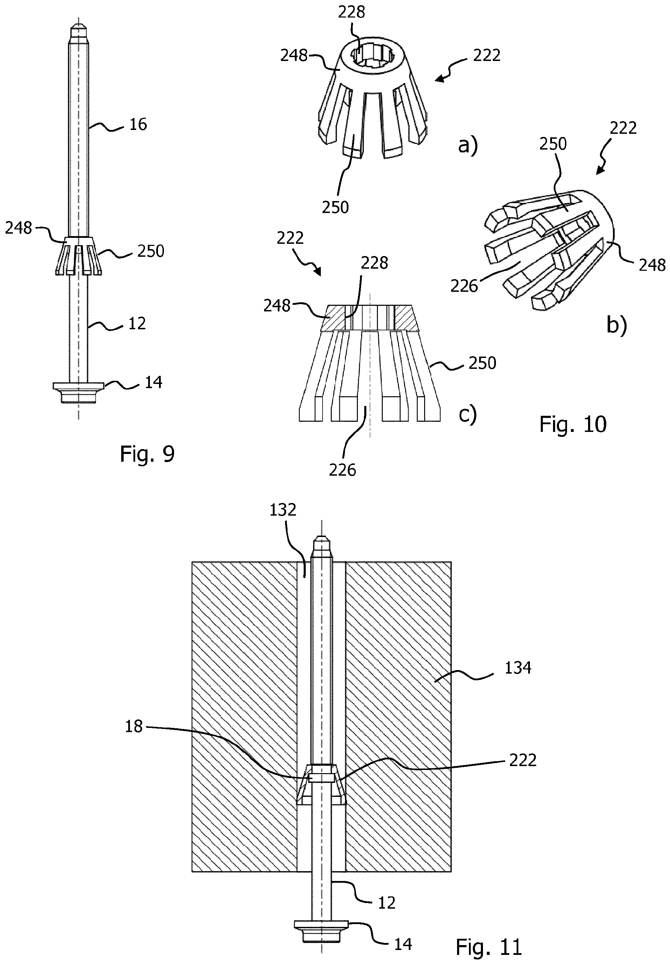

Anhand der Figuren 9 bis 11 soll ein weiteres Ausführungsbeispiel eines elastischen Halteelements erläutert werden. Dies erfolgt am Beispiel des in Figur 1 gezeigten Befestigungsbolzens 10. In gleicher Weise könnte hier der Befestigungsbolzen 110 aus Figur 2 zum Einsatz kommen. Das bei dem Ausführungsbeispiel der Figuren 9 bis 11 vorgesehene elastische Halteelement 222 weist einen ringförmigen Abschnitt 248 auf, von dem ausgehend sich in dem gezeigten Beispiel eine Mehrzahl von elastischen Haltearmen 250 erstreckt. Der ringförmige Abschnitt 248 bildet an seiner Innenseite wiederum einen ringförmigen Halteabschnitt 228, der in diesem Beispiel stufenförmig ausgebildet ist. An der oben erläuterten Funktion des ringförmigen Halteabschnitts 228 ändert dies nichts. Die Außenflächen der elastischen Haltearme 250 liegen in einer abschnittsweise kegelstumpfförmigen Mantelfläche, wobei die Außenflächen der elastischen Haltearme 250 im Bereich ihres freien Endes jeweils einen Abschnitt besitzen, die in einer zylindrischen Mantelfläche liegt. Die elastischen Haltearme 250 begrenzen zwischen sich wiederum eine Aufnahme 226 für einen Befestigungsbolzen. Auch das elastische Halteelement 222 kann beispielsweise aus einem elastischen Gummimaterial oder einem elastischen Kunststoffmaterial bestehen.

Zum Anordnen an dem Befestigungsbolzen 10 wird das elastische Halteelement 222 wiederum auf den Befestigungsbolzen 10 aufgeschoben, wobei der ringförmige Abschnitt 248 zunächst durch das Außengewinde 16 elastisch nach außen verformt wird bis der ringförmige Halteabschnitt 228 unter elastischer Rückverformung des ringförmigen Abschnitts 248 in der ringförmigen Halteaufnahme 20 des Befestigungsbolzens 10 formschlüssig aufgenommen ist, wie dies in Figur 9 zu sehen ist. In diesem Zustand kann der Befestigungsbolzen 10 mit dem elastischen Halteelement 222 in eine Durchgangsöffnung 132 eines Bauteils 134 eingesetzt werden bis zum Erreichen des in Figur 11 gezeigten Vormontagezustands.

In Figur 11 ist zu erkennen, dass die Durchgangsöffnung 132 des Bauteils 134 eine zylindrische Durchgangsöffnung 132 mit konstantem Durchmesser ist. Dieser Durchmesser ist etwas kleiner als der durch die elastischen Haltearme 250 in ihrem Ruhezustand gebildete größte Querschnitt. Entsprechend werden die elastischen Haltearme 250 im Zuge des Einsetzens in die Durchgangsöffnung 132 radial nach innen verformt. In dem in Figur 11 gezeigten Zustand ist der Befestigungsbolzen 10 über das elastische Halteelement 222 allein durch Reibschluss zwischen den elastischen Haltearmen 250 und der Innenfläche der Durchgangsöffnung 132 in dieser gehalten. In diesem Zustand kann das Bauteil 134 wieder an einem Trägerbauteil befestigt werden, indem der Befestigungsbolzen 10 in eine entsprechende Befestigungsöffnung des Trägerbauteils eingeschraubt wird, wie dies in Figur 8 gezeigt ist.

In den Figuren ist die Einführrichtung der Befestigungsbolzen in die Befestigungsöffnungen vertikal von unten nach oben dargestellt. Selbstverständlich ist hiermit keine Einschränkung verbunden. Vielmehr sind beliebige Einführrichtungen möglich.

### Bezugszeichenliste

- 10, 110: Befestigungsbolzen
- 12, 112: Schaftabschnitt
- 14, 114: Bolzenkopf
- 16, 116: Außengewinde
- 18: Querschnittserweiterung
- 20, 120: Halteaufnahme
- 22, 122, 222: Elastisches Halteelement
- 24, 124: Außenfläche
- 26, 126, 226: Aufnahme
- 28, 128, 228: Halteabschnitt
- 32, 132: Durchgangsöffnung
- 34, 134: Bauteil
- 36: Erster Abschnitt
- 38: Zweiter Abschnitt
- 40: Stufenartige Querschnittsveränderung
- 42: Trägerbauteil
- 44: Befestigungsöffnung
- 46: Innengewinde
- 130: zylindrischer Abschnitt
- 248: ringförmiger Abschnitt
- 250: Haltearme

## Patentansprüche

1. Befestigungssystem zur Befestigung eines Bauteils (34, 134) an einem Trägerbauteil (42), insbesondere einem Trägerbauteil (42) eines Fahrzeugs, umfassend einen Befestigungsbolzen (10, 110), der durch eine Durchgangsöffnung (32, 132) des Bauteils (34, 134) hindurch in eine Befestigungsöffnung (44) des Trägerbauteils (42) einsetzbar ist, **dadurch gekennzeichnet, dass** das Befestigungssystem weiterhin ein auf einem Schaftabschnitt (12, 112) des Befestigungsbolzens (10, 110) angeordnetes elastisches Halteelement (22, 122, 222) umfasst, das dazu ausgebildet ist, beim Einführen des Befestigungsbolzens (10, 110) in die Durchgangsöffnung (32, 132) des Bauteils (34, 134) elastisch verformt und in der Durchgangsöffnung (32, 132) gehalten zu werden.

2. Befestigungssystem nach Anspruch 1,
**dadurch gekennzeichnet, dass**
das elastische Halteelement (22, 122, 222) hülsenförmig ausgebildet ist.

3. Befestigungssystem nach einem der vorhergehenden Ansprüche,
**dadurch gekennzeichnet, dass**
das elastische Halteelement (22, 122) eine zumindest abschnittsweise kegelstumpfförmige Außenfläche (24, 124) besitzt.

4. Befestigungssystem nach einem der vorhergehenden Ansprüche,
**dadurch gekennzeichnet, dass**
die Außenfläche (124) des elastischen Halteelements (122) mindestens einen zylindrischen Abschnitt (130) besitzt.

5. Befestigungssystem nach einem der vorhergehenden Ansprüche,
**dadurch gekennzeichnet, dass**
das elastische Halteelement (22, 122, 222) dazu ausgebildet ist, beim Einführen des Befestigungsbolzens (10, 110) in die Durchgangsöffnung (32) eine Haltestruktur der Durchgangsöffnung (32) zu hintergreifen.

6. Befestigungssystem nach Anspruch 5,
**dadurch gekennzeichnet, dass**
die Haltestruktur eine stufenförmige Querschnittsveränderung (40) der Durchgangsöffnung (32) umfasst.

7. Befestigungssystem nach einem der vorhergehenden Ansprüche,
**dadurch gekennzeichnet, dass**
das elastische Halteelement (22, 122, 222) dazu ausgebildet, durch Reibkraft in der Durchgangsöffnung (32, 132) des Bauteils (34, 134) gehalten zu werden.

8. Befestigungssystem nach Anspruch 7,
**dadurch gekennzeichnet, dass**
das elastische Halteelement (222) eine Mehrzahl von elastischen Haltearmen (250) aufweist, die beim Einsetzen in die Durchgangsöffnung (32, 132) aus einer Ruhelage nach innen gedrückt werden.

9. Befestigungssystem nach Anspruch 8,
**dadurch gekennzeichnet, dass**
die elastischen Haltearme (250) in ihrer Ruhestellung auf einer zumindest abschnittsweise kegelstumpfförmigen Mantelfläche liegen.

10. Befestigungssystem nach einem der Ansprüche 1 bis 9,
**dadurch gekennzeichnet, dass**
das elastische Halteelement (22, 122, 222) formschlüssig und/oder reibschlüssig an dem Schaftabschnitt (12, 112) des Befestigungsbolzens (10, 110) gehalten ist.

11. Befestigungssystem nach Anspruch 10,
**dadurch gekennzeichnet, dass**
das elastische Halteelement (22, 122, 222) mit einem ringförmigen Halteabschnitt (28, 128, 228) in einer ringförmigen Halteaufnahme (20, 120) des Schaftabschnitts (12, 112) aufgenommen ist.

12. Befestigungssystem nach einem der Ansprüche 1 bis 9,
**dadurch gekennzeichnet, dass**
das elastische Halteelement (22, 122, 222) stoffschlüssig an dem Schaftabschnitt (12, 112) des Befestigungsbolzens (10, 110) gehalten ist.

13. Befestigungssystem nach einem der vorhergehenden Ansprüche,
**dadurch gekennzeichnet, dass**
das elastische Halteelement (22, 122, 222) zumindest abschnittsweise aus einem Gummimaterial besteht.

14. Befestigungssystem nach einem der vorhergehenden Ansprüche,
**dadurch gekennzeichnet, dass**
das elastische Halteelement (22, 122, 222) zumindest abschnittsweise aus einem Kunststoffmaterial und/oder einem Metallwerkstoff besteht.

15. Befestigungssystem nach einem der vorhergehenden Ansprüche,
**dadurch gekennzeichnet, dass**
es weiterhin das Bauteil (34, 134) mit der Durchgangsöffnung (32, 132) und/oder das Trägerbauteil (42) mit der Befestigungsöffnung (44) umfasst.
